# EUROPEAN PATENT SPECIFICATION

(11) **EP 2 547 813 B1**
(45) Date of publication and mention of the grant of the patent: **08.08.2018**
(21) Application number: 11756575.4
(22) Date of filing: 18.03.2011
(51) Int. Cl.: D03D 1/00, D03D 15/00, B65G 15/34

(54) **ENVIRONMENT-FRIENDLY AND ELECTRICALLY CONDUCTIVE BELT AND METHOD OF PREPARING THE SAME**
UMWELTFREUNDLICHES UND ELEKTRISCH LEITENDES BAND SOWIE HERSTELLUNGSVERFAHREN DAFÜR
COURROIE ÉLECTROCONDUCTRICE ET RESPECTUEUSE DE L'ENVIRONNEMENT ET PROCÉDÉ DE PRÉPARATION ASSOCIÉ

(30) Priority: 19.03.2010 KR 20100024870
(43) Date of publication of application: 23.01.2013
(73) Proprietor: Roulunds Rubber Korea Ltd., Yangsan-si, Gyeongsangnam-do 626-230 (KR)
(72) Inventor: CHOI, Chang Wook, Busan 616-735 (KR)
(74) Representative: Preusser, Andrea
(86) International application number: PCT/KR2011/001877
(87) International publication number: WO 2011/115444

(56) References cited:
- EP-A2- 0 240 861
- EP-A2- 0 240 861
- WO-A1-02/081945
- WO-A1-2007/093473
- JP-A- 5 272 593
- JP-A- S5 663 150
- JP-U- H05 064 113
- US-A- 5 961 412

## Description

### Technical Field

The present invention relates to an environment-friendly and electrically conductive belt and a method of preparing the same.

### Background Art

In general, an industrial rubber belt is made of carbon powder named carbon black to maintain the strength and the quality of rubber while providing electrical conductivity to the surface of the belt. Since such carbon black serves as a contributor for PAHs (polycyclic aromatic hydrocarbons) which is a kind of a toxic substance, the carbon black may not be an environment-friendly material.

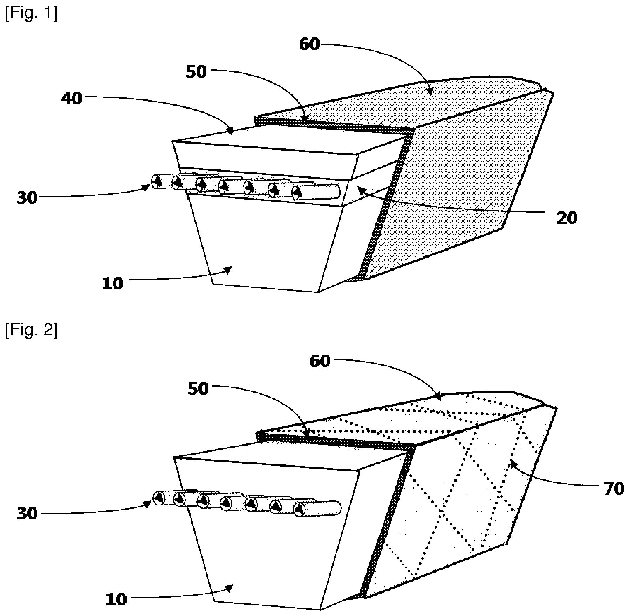

FIG. 1 is a sectional view showing a portion of a conventional industrial wrapped V-belt. Such an industrial wrapped V-belt is fabricated by combining a variety of rubber, canvas and a tension member 30, which is composed of polyester, by taking the driving characteristic of the belt into consideration. Since various stresses (e.g., flexion deformity) repeatedly and continuously occur due to the driving characteristic of the belt, rubber used for the belt requires appropriate strength and strain against the stresses. In order to provide such strength and strain to the belt, carbon powder such as carbon black as well as raw rubber are added and in order to bond polymer chains of raw rubber with each other, sulfur (S), a vulcanization accelerator, an antioxidant, and other chemicals are added to the raw rubber.

In addition, the rubber belt includes a variety of rubber 10, 20, 40, and 50 (see FIG. 1) due to the characteristics thereof. Accordingly, several toxic substances may be derived from chemicals used for fabricating the rubber. For instance, there may be PAHs derived from carbon black, nitrosamine derived from a thiuram-based vulcanization accelerator, and aromatic toxic substances derived from process oil. If such a harmful rubber belt ismounted on a machine related to beverages and foods, serious problems may occur. Even if a very small amount of a toxic substance is contained in the rubber belt, the toxic substance directly or indirectly exerts a harmful influence on a human body through fine dust that may be generated when the rubber belt is driven. Accordingly, it is very important to completely remove a toxic factor.

However, if carbon black, thiuram-based accelerators, and process oil are excluded in order to fabricate an environment-friendly belt, electrical conductivity essential for an industrial belt may be lost. In the case of a conventional wrapped V-belt, rubber is coated on canvas wrapping an outer portion of the V-belt through a surface treatment process, so that the V-belt obtains electrical conductivity by carbon black contained in the rubber. If rubber having no carbon black is surface-treated, the V-belt may lose the electrical conductivity. The rubber containing carbon represents electrical conductivity because a great amount of π electrons are distributed in carbon.

In general, since a belt having no electrical conductivity generates static electricity due to driving friction or ambient environment, if the belt is used in a specific place in which oil leaks or dust is generated, explosion or fire may occur due to the static electricity.

A conductive power transmission belt comprising a body made of rubber and a layer of a cover fabric made of non-conductive filaments coated with carbon black, copper-, and aluminium particles is known from JPS5663150 A.

EP0240861 A2, in turn, discloses a driving belt comprising a flat belt core made of a thermoelastic material and a layer of a belt cover fabric made of a mix of plastic-, organic-, and conductive (metal) yarns.

Accordingly, the present invention has been made to solve the above-mentioned problems occurring in the prior art, and the present invention provides an environment-friendly and electrically conductive belt and a method of preparing the same, in which materials, which may produce environmentally hazardous substances, are excluded from a mixture for a rubber belt, and electrically conductive fibers are uniformly oriented in warp and weft yarn directions in canvas applied to a conventional belt product, so that the electrical conductivity can be represented on the surface of the rubber belt.

### Disclosure of Invention

### Technical Problem

An object of the present invention is to provide an environment-friendly and electrically conductive belt without materials such as carbon black that may produce environmentally hazardous substances.

Another object of the present invention is to provide a method of preparing the environment-friendly and electrically conductive belt.

### Solution to Problem

In accordance with an aspect of the present invention, there is provided a belt including a rubber core covered with a cover fabric 60including conductivity filaments 70oriented in warp and weft yarn directions.

An interval between the conductivity filaments 70 is preferably a range of 0.1 cm to 3 cm, but the present invention is not limited thereto.

The rubber core may further include a tension member 30.

The belt may further include a friction rubber layer provided at one side surface of the cover fabric 60.

The tension member 30 may include at least one selected from the group consisting of polyester, aramid, nylon, and glass fiber, but the present invention is not limited thereto.

The rubber core may include at least one selected from the group consisting of natural rubber, butadiene rubber, styrene butadiene rubber, chloroprene rubber, and ethylene propylene rubber, but the present invention is not limited thereto.

The rubber core may include at least one selected from the group consisting of compression rubber 10, cushion rubber 20, tension rubber 40, and friction rubber 50.

The cover fabric 60 may include a cotton fabric, a blend fabric of cotton and polyester, or a blend fabric of cotton and nylon.

The cover fabric 60 has a thickness of 0.3 mm to 1.0 mm, but the present invention is not limited thereto.

The conductivity filament 70 includes a stainless steel yarn or a carbon fiber, but the present invention is not limited thereto.

In one embodiment of the invention, the conductivity filament 70 may include a stainless steel yarn.

The conductivity filament 70 may include a mono-filament or a multi-filament.

In one embodiment of the invention, the belt may have a V shape.

In one embodiment of the invention, the belt may further include a saw tooth (the toothed belt).

In one embodiment of the invention, the belt may beused for power transmission or a conveyer.

In one embodiment of the invention, the belt may have a sectional structure in a shape of an inverse trapezoid.

In accordance with another aspect of the present invention, there is provided a method of preparing an electrically conductive belt. The method includes (i) preparing a cover fabric by orienting conductivity filaments 70 in warp and weft yarn directions, and (ii) covering the cover fabric 60 on a rubber core.

An interval between the conductivity filaments 70 is preferably a range of 0.1 cm to 3 cm, but the present invention is not limited thereto.

### Advantageous Effects of Invention

As described above, the belt according to the present invention has no material such as carbon black that may produce environmentally hazardous substances, so that the belt is environment-friendly. In addition, electrically conductive fibers are oriented in canvas of the belt with a constant interval, so that electrical conductivity can be represented on the entire surface of the belt.

### Brief Description of Drawings

FIG. 1 is a sectional view showing a portion of a conventional industrial belt; and
FIG. 2 is a sectional view showing a portion of an environment-friendly and electrically conductive belt according to a preferred embodiment of the present invention.

### Best Mode for Carrying out the Invention

Hereinafter, a preferred embodiment of the present invention will be described in more detail. The following embodiments are for an illustrative purpose, but the scope of the present invention is not limited thereto.

### [Embodiment]

### Embodiment 1: Preparation of Environment-Friendly and Electrically Conductive Belt

According to the present invention, materials that may produce environmentally hazardous substances are excluded from a mixture for a rubber belt, and conductive filaments are uniformly oriented in a canvas in weft and warp yarn directionsso that the rubber belt can obtain electrical conductivity.

In detail, the electrically conductive belt according to the present invention can be prepared through the following steps.

### 1-1. Preparation of Conductive Cover Fabric

Stainless steel yarn is oriented in the canvas for a belt with an interval of 1.0cm in warp and weft yarn directions, thereby preparing a cover fabric 60. Thereafter, after coating an inner side of the cover fabric 60 with thin friction rubber, the cover fabric 60 isslit by a desirable width according to standard requirements (Bias and Slitting step). Conductivity results according to intervalsbetween conductivity filaments 70 are shown in Table 1.

### Table 1

### [Table 1]

**[Table]**

| Conductivity filament interval | Width of test sample of canvas | Voltage (V) | Result resistance (M) |
|---|---|---|---|
| 2cm | 36 mm | 500 | 26.4x10³ |
| 1cm | 36 mm | 500 | 0.20 |

### 1-2. Forming of Belt

Compression rubber 10 is cut by a predetermined length and is wound around a cylindrical drum of a forming machine. Thereafter, tension members 30 are wound above the compression rubber 10 with tensile force of 2.5 Kgf and 76 strands per 100 mm, and tension rubber 40 is wound above the tension members 30. After cutting a rubber core formed as described above into a predetermined width, the rubber core is formed in a V-shape (Skiving step). The rubber core is covered with the cover fabric 60 prepared in the previous step, thereby preparing the belt (Covering step).

### 1-3. Vulcanization of Belt

Although the belt that has covered with the cover fabric 60 in the previous step may be vulcanized by a Pot vulcanizer, a Roto vulcanizer, or a Press vulcanizer, according to the present invention, the belt is vulcanized by the Pot vulcanizer for 19 minutes by using a vapor pressure under the condition of an external pressure of 7.5 Kgf and an internal pressure of 4.5 Kgf. Accordingly, the belt obtains elasticity and strength.

Carbon black is not used for rubber employed when preparing the belt according to the present invention. In addition, a thiuram-based accelerator and process oil are excluded from the rubber.

### Embodiment 2: Electrical Conductivity of Belt of Present Invention

A conductivity experiment for the environmentally-friendly belt according to the present invention is performed, and the environmentally-friendly belt according to the present invention iscompared with a conventional industrial belt in terms of electrical conductivity (see Table 2).

When measuring resistance of the V-belt after 24 hours from vulcanization by using a 500V-DC insulation resistance meter at a temperature of 15 °C to 30 °C, the V-belt must satisfy Specification_ISO1813 (ISO 1813 Belt drives-V-ribbed belts, joined V-belts and V-belts including wide section belts and hexagonal belts-Electrical conductivity of antistatic belts: Characteristics and methods of test) of Table 2.

### Table 2

### [Table 2]

**[Table]**

| | ISO1813 | Conventional Belt | Belt of the present invention |
|---|---|---|---|
| Resistance (M) | Max. 3.6 | 0.56 | 0.20 |

In Table 2, the conventional belt for the comparison test is fabricated by Roulunds Rubber Korea Ltd., satisfied SPZ specification, and currently sold in a belt market. The conventional belt is a general belt including carbon black.

As shown in Table 2, the belt according to the present invention is remarkably improved in electrical conductivity when comparing with the conventional belt.

Although an exemplary embodiment of the present invention has been described for illustrative purposes, those skilled in the art will appreciate that various modifications, additions and substitutions are possible, without departing from the scope and spirit of the invention as disclosed in the accompanying claims.

## Claims

1. A belt comprising a rubber core, wherein the rubber core is covered with a cover fabric (60) including filaments (70) oriented in warp and weft yarn directions, **characterised in that** the filaments (70) are conductive.

2. The belt of claim 1, wherein an interval between the conductivity filaments (70) is a range of 0.1 cm to 3 cm.

3. The belt of claim 1 or 2, wherein the rubber core further comprises a tension member (30).

4. The belt of claim 1 or 2, further comprising a friction rubber layer provided at one side surface of the cover fabric (60).

5. The belt of claim 3, wherein the tension member (30) includes at least one selected from the group consisting of polyester, aramid, nylon, and glass fiber.

6. The belt of claim 1 or 2, wherein the cover fabric (60) includes a cotton fabric, a blend fabric of cotton and polyester, or a blend fabric of cotton and nylon.

7. The belt of claim 1 or 2, wherein each conductivity filament (70) includes a stainless steel yarn or a carbon fiber.

8. The belt of claim 1 or 2, wherein the conductivity filament (70) includes a mono-filament or a multi-filament.

9. The belt of claim 1 or 2, wherein the belt has a V shape.

10. The belt of claim 1 or 2, wherein the belt is used for power transmission or a conveyer.

11. A method of preparing an electrically conductive belt, comprising:
(i) preparing a cover fabric (60) by orienting conductivity filaments (70) in warp and weft yarn directions; and
(ii) covering the cover fabric (60) on a rubber core.

12. The method of claim 11, wherein an interval between the conductivity filaments (70) is a range of 0.1 cm to 3 cm.

13. The method of claim 11 or 12, wherein the rubber core further comprises a tension member (30).

14. The method of claim 11 or 12, further comprising: coating a friction rubber layer on one side surface of the cover fabric (60).

15. The method of claim 13, wherein the tension member (30) includes at least one selected from the group consisting of polyester, aramid, nylon, and glass fiber.

16. The method of claim 11 or 12, wherein the cover fabric (60) includes a cotton fabric, a blend fabric of cotton and polyester, or a blend fabric of cotton and nylon.

17. The method of claim 11 or 12, wherein each conductivity filament (70) includes a stainless steel yarn or a carbon fiber.

18. The method of claim 11 or 12, wherein the conductivity filament (70) includes a mono-filament or a multi-filament.

## Patentansprüche

1. Band, das einen Kautschukkern umfasst, wobei der Kautschukkern mit einem Deckgewebe (60) bedeckt ist, das Filamente (70) enthält, die in Kett- und Schussgarnrichtungen ausgerichtet sind, **dadurch gekennzeichnet, dass** die Filamente (70) leitfähig sind.

2. Band gemäß Anspruch 1, wobei der Abstand zwischen den leitfähigen Filamenten (70) in dem Bereich von 0,1 cm bis 3 cm liegt.

3. Band gemäß Anspruch 1 oder 2, wobei der Kautschukkern ferner ein Spannelement (30) umfasst.

4. Band gemäß Anspruch 1 oder 2, ferner umfassend eine Reibungs-Kautschukschicht, die auf einer Seitenoberfläche des Deckgewebes (60) angeordnet ist.

5. Band gemäß Anspruch 3, wobei das Spannelement (30) wenigstens eines ausgewählt aus der Gruppe bestehend aus Polyester, Aramid, Nylon und Glasfaser umfasst.

6. Band gemäß Anspruch 1 oder 2, wobei das Deckgewebe (60) ein Baumwollgewebe, ein Mischgewebe aus Baumwolle und Polyester oder ein Mischgewebe aus Baumwolle und Nylon umfasst.

7. Band gemäß Anspruch 1 oder 2, wobei jedes leitfähige Filament (70) einen Faden aus rostfreiem Stahl oder eine Kohlenstofffaser umfasst.

8. Band gemäß Anspruch 1 oder 2, wobei das leitfähige Filament (70) ein Monofilament oder ein Multifilament umfasst.

9. Band gemäß Anspruch 1 oder 2, wobei das Band eine V-Form aufweist.

10. Band gemäß Anspruch 1 oder 2, wobei das Band zur Kraftübertragung oder als Fördereinrichtung verwendet wird.

11. Verfahren zur Herstellung eines elektrisch leitfähigen Bands, umfassend:
(i) Herstellen eines Deckgewebes (60) durch Ausrichten von leitfähigen Filamenten in Kett- und Schussgarnrichtungen; und
(ii) Schichten des Deckgewebes (60) auf einen Kautschukkern.

12. Verfahren gemäß Anspruch 11, wobei der Abstand zwischen den leitfähigen Filamenten (70) in dem Bereich von 0,1 cm bis 3 cm liegt.

13. Verfahren gemäß Anspruch 11 oder 12, wobei der Kautschukkern ferner ein Spannelement (30) umfasst.

14. Verfahren gemäß Anspruch 11 oder 12, ferner umfassend: Schichten einer Reibungs-Kautschukschicht auf eine Seitenoberfläche des Deckgewebes (60).

15. Verfahren gemäß Anspruch 13, wobei das Spannelement (30) wenigstens eines ausgewählt aus der Gruppe bestehend aus Polyester, Aramid, Nylon und Glasfaser umfasst.

16. Verfahren gemäß Anspruch 11 oder 12, wobei das Deckgewebe (60) ein Baumwollgewebe, ein Mischgewebe aus Baumwolle und Polyester oder ein Mischgewebe aus Baumwolle und Nylon umfasst.

17. Verfahren gemäß Anspruch 11 oder 12, wobei jedes leitfähige Filament (70) einen Faden aus rostfreiem Stahl oder eine Kohlenstofffaser umfasst.

18. Verfahren gemäß Anspruch 11 oder 12, wobei das leitfähige Filament (70) ein Monofilament oder ein Multifilament umfasst.

## Revendications

1. Courroie comprenant une âme en caoutchouc, dans laquelle l'âme en caoutchouc est recouverte d'un tissu de couverture (60) comprenant des filaments (70) orientés dans des directions correspondant à des fils de chaîne et de trame, **caractérisée en ce que** les filaments (70) sont conducteurs.

2. Courroie selon la revendication 1, dans laquelle un intervalle entre les filaments conducteurs (70) est de 0,1 cm à 3 cm.

3. Courroie selon la revendication 1 ou 2, dans laquelle l'âme en caoutchouc comprend en outre un élément de tension (30).

4. Courroie selon la revendication 1 ou 2, comprenant en outre une couche de frottement en caoutchouc présente au niveau d'une surface latérale du tissu de couverture (60).

5. Courroie selon la revendication 3, dans laquelle l'élément de tension (30) comprend au moins un matériau sélectionné dans le groupe constitué du polyester, de l'aramide, du nylon et de la fibre de verre.

6. Courroie selon la revendication 1 ou 2, dans laquelle le tissu de couverture (60) comprend un tissu de coton, un tissu mélangé de coton et de polyester, ou un tissu mélangé de coton et de nylon.

7. Courroie selon la revendication 1 ou 2, dans laquelle chaque filament conducteur (70) comprend un fil d'acier inoxydable ou une fibre de carbone.

8. Courroie selon la revendication 1 ou 2, dans laquelle le filament conducteur (70) comprend un monofilament ou un multifilament.

9. Courroie selon la revendication 1 ou 2, la courroie étant en forme de V.

10. Courroie selon la revendication 1 ou 2, la courroie étant utilisée comme courroie de transmission ou pour un convoyeur.

11. Procédé de préparation d'une courroie conductrice d'électricité, comprenant :
(i) la préparation d'un tissu de couverture (60) par orientation de filaments conducteurs (70) dans des directions correspondant à des fils de chaîne et de trame ; et
(ii) l'utilisation du tissu de couverture (60) pour recouvrir une âme en caoutchouc.

12. Procédé selon la revendication 11, dans lequel un intervalle entre les filaments conducteurs (70) est de 0,1 cm à 3 cm.

13. Procédé selon la revendication 11 ou 12, dans lequel l'âme en caoutchouc comprend en outre un élément de tension (30).

14. Procédé selon la revendication 11 ou 12, comprenant en outre :
l'application d'un revêtement pour former une couche de frottement en caoutchouc sur une surface latérale du tissu de couverture (60).

15. Procédé selon la revendication 13, dans lequel l'élément de tension (30) comprend au moins un matériau sélectionné dans le groupe constitué du polyester, de l'aramide, du nylon et de la fibre de verre.

16. Procédé selon la revendication 11 ou 12, dans lequel le tissu de couverture (60) comprend un tissu de coton, un tissu mélangé de coton et de polyester, ou un tissu mélangé de coton et de nylon.

17. Procédé selon la revendication 11 ou 12, dans lequel chaque filament conducteur (70) comprend un fil d'acier inoxydable ou une fibre de carbone.

18. Procédé selon la revendication 11 ou 12, dans lequel le filament conducteur (70) comprend un monofilament ou un multifilament.
